# EUROPÄISCHE PATENTANMELDUNG

(11) **EP 3 401 270 A1**
(43) Veröffentlichungstag der Anmeldung: **14.11.2018**
(21) Anmeldenummer: 18171144.1
(22) Anmeldetag: 08.05.2018
(51) Int. Cl.: B66D 5/26, B66B 5/18, F16D 59/02, F15B 11/044, F16D 63/00, B60T 13/22, F16D 121/10

(54) **FLUIDSTEUERUNG, BREMSLÜFTGERÄT, BREMSANORDNUNG**

(30) Priorität: 08.05.2017 DE 102017109828
(71) Anmelder: Pintsch Bubenzer GmbH, 57548 Kirchen-Wehbach (DE)
(72) Erfinder: Gentzsch, Iris, 79189 Bad Krozingen (DE); Gentzsch, Torsten, 79189 Bad Krozingen (DE)
(74) Vertreter: MFG Patentanwälte Meyer-Wildhagen Meggle-Freund Gerhard PartG mbB

(57) **Zusammenfassung**

Die Erfindung betrifft eine Fluidsteuerung (101) zur Betätigung einer Stellzylinderanordnung (400) eines Bremslüftgeräts (1), wobei die Fluidsteuerung (101) aufweist: einen Vorlaufstrang (102) zum Druckaufbau in der Stellzylinderanordnung (400), einen Rücklaufstrang (107) zum Druckabbau aus der Stellzylinderanordnung (400), wobei im Rücklaufstrang (107) ein erster und ein zweiter Rücklaufzweig (108, 109) vorgesehen sind, die parallel wirken, im ersten Rücklaufzweig (108) zwei parallel wirkende, ohne Aktivierung geöffnete erste Stellventile (110) vorgesehen sind und im zweiten Rücklaufzweig (109) ein zweites ohne Aktivierung geöffnetes Stellventil (112) vorgesehen ist, und durch eine entsprechende Ansteuerung der ersten Stellventile (110) und des zweiten Stellventils (112) der Druckabbau aus der Stellzylinderanordnung (400) und damit eine Stellzylinderbewegung mit mehreren Geschwindigkeiten realisierbar ist. Die Erfindung betrifft weiter ein Bremslüftgerät (1) und eine Bremsanordnung.

## Beschreibung

### TECHNISCHES GEBIET

Die vorliegende Offenbarung bezieht sich allgemein und insbesondere auf eine Fluidsteuerung zur Betätigung einer Stellzylinderanordnung eines Bremslüftgeräts, wobei die Fluidsteuerung aufweist: einen Vorlaufstrang zum Druckaufbau in der Stellzylinderanordnung, einen Rücklaufstrang zum Druckabbau aus der Stellzylinderanordnung, wobei im Rücklaufstrang ein erster und ein zweiter Rücklaufzweig vorgesehen sind, die parallel wirken.

### TECHNISCHER HINTERGRUND

Es sind allgemein eine Vielzahl von federbelasteten Bremsanlagen bekannt, bei denen eine Federkraft über ein kraftverstärkendes Hebelsystem auf Bremselemente wirkt, die dann wiederum an einem entsprechenden Bremskörper (zum Beispiel einer Scheibe oder einer Trommel) angreifen. Sie sind in der Regel als Sicherheitsbremsen ausgelegt und arbeiten nach dem Fail-Safe-Prinzip. Das heißt, die Bremsen sind so ausgelegt, dass sie im Störfall, zum Beispiel bei einem Stromausfall, automatisch schließen und die zu bremsenden, bewegten Teile möglichst schnell zum Stillstand bringen oder in einer bestimmten Position festhalten (zum Beispiel bei Hebezeugen oder Aufzügen).

Dazu ist es zunächst notwendig, die Bremsen in geöffnetem, also im gelüfteten Zustand zu halten. Dazu dienen sogenannte Bremslüftgeräte, welche im aktivierten Zustand gegen die Bremsfederkraft arbeiten, diese aufheben, die Bremse öffnen und im (geöffneten) gelüfteten Zustand festhalten. Besonders verbreitet sind elektrohydraulische Bremslüftgeräte, die parallel zur Bremsfeder auf das Bremshebelgestänge wirken.

Es gibt Bremslüftgeräte, die nach folgendem Prinzip arbeiten: Zum Lösen oder Lüften der Bremse wird ein Antrieb (in der Regel ein Elektromotor) in Bewegung versetzt. Dieser Antrieb wirkt auf eine Kreiselpumpe, die im Betrieb ein Hydraulikmedium unter Druck setzt und fördert, das seinerseits auf eine Zylinderkolbenfläche wirkt, die über eine Stellstange mit dem Bremshebelgestänge gekoppelt ist. Dabei wirkt bei einer bestimmten Drehzahl ein bestimmter Druck auf die Stellkolbenfläche, der wiederum eine bestimmte Stellkraft auf das Gestänge ausübt und so die Rückstellkraft der Bremsfeder neutralisiert und die Bremsanordnung im geöffneten Zustand hält.

Ein anderer Ansatz besteht darin, ein Bremslüftgerät im Aussetzbetrieb zu betreiben, d. h. nach dem Aufbau eines bestimmten Betriebsdrucks am Zylinder wird dieser über geeignete Schaltventile gehalten und zum Bremsen wieder abgebaut. So ein Bremslüftgerät ist beispielsweise aus der DE 10 2013 105 446 A1 bekannt. Bei so einem Bremslüftgerät wird der erforderliche Arbeitsdruck in einer Stellzylinderanordnung über eine Pumpe aufgebaut. Der Arbeitsdruck ist dabei so hoch, dass ein Stellkolben, der im Zylinderrohr der Stellzylinderanordnung verstellbar ist, eine erste Arbeitsstellung einnimmt (ausgefahrener Zustand), in der er die Kräfte einer Bremsfeder überwindet und die Bremsanordnung im geöffneten bzw. gelüfteten Zustand hält. Sobald der erforderliche Arbeitsdruck aufgebaut ist, wird die Pumpe abgeschaltet und ein zwischen Stellzylinderanordnung und Hydraulikpumpe wirkendes Rückschlagventil verhindert den Druckabbau aus der Stellzylinderanordnung.

Zur Steuerung des Druckabbaus und des Druckaufbaus ist die Fluidzylinderanordnung mit einer Fluidsteuerung versehen, die den Vorlauf (zum Öffnen/Lüften der Bremse) und den Rücklauf (zum Schließen der Bremse) eines Hydraulikfluids (Hydrauliköls) steuert.

Zum Aufbau des Arbeitsdrucks ist ein Vorlaufstrang vorgesehen und zum Druckabbau ist ein Rücklaufstrang vorgesehen, der den Arbeitsdruck in der Stellzylinderanordnung abbaut und diese zu einer Tankanordnung hin öffnet, so dass das Hydraulikfluid abfließen kann und die Bremsanordnung unter Wirkung der Bremsfeder ihren geschlossenen Zustand einnimmt (Bremse fällt ein).

Dazu sind im Rücklaufstrang zwei ohne Aktivierung geöffnete Stellventile vorgesehen, die bei Aktivierung geschlossen sind und den Rücklauf verhindern. Meist handelt es sich um elektromagnetisch schaltbare 2/2-Wegeventile, die stromlos ihre geöffnete Stellung einnehmen. Auf diese Weise wird ein Fail-Safe-Prinzip realisiert, so dass bei Ausfall der Energieversorgung (des Stroms) die Bremsanordnung in ihren geschlossenen Zustand übergeht. Dadurch, dass zwei Stellventile vorgesehen sind, ist die Einrichtung bzw. die Fluidsteuerung redundant ausgelegt, so dass auch bei Ausfall eines Stellventils das zweite Stellventil ausreicht, um den Bremsvorgang mit hinreichender Geschwindigkeit auszulösen.

Es gibt jedoch Anwendungen, in denen es wünschenswert ist, die Einfallgeschwindigkeit der Bremsanordnung bzw. die Geschwindigkeit des Druckabbaus aus der Stellzylinderanordnung zu variieren, und insbesondere herabzusetzen. Dies ist beispielsweise beim Abbremsen von Antriebseinheiten in der Förder- und Umschlagtechnik wünschenswert, bei denen u. U. sehr große Massen abgebremst werden müssen. Hier können Betriebszustände vorliegen, in denen unterschiedliche Bremszeiten, insbesondere stark verzögerte, wünschenswert sein können, um ein material- und komponentenschonendes Anhalten einer solchen Anlage zu realisieren.

Es gibt zwar Ansätze, bei denen die Bremszeit an sich einstellbar ist, indem der Strömungsquerschnitt über ein Drosselventil eingestellt wird, welches den beiden Stellventilen vorgeschaltet ist. So eine Lösung löst jedoch nur das Problem, eine einzige Bremszeit einzustellen bzw. anzupassen. Mit diesem Ansatz ist dann eine Variation der Bremszeiten im Betrieb nicht möglich.

Es besteht also die Aufgabe, eine Fluidsteuerung bereitzustellen, welche die oben genannten Nachteile wenigstens teilweise ausräumt. Insbesondere kann eine Aufgabe darin gesehen werden, eine Fluidsteuerung bereitzustellen, mit der mehrere, gegebenenfalls auch einstellbare Bremsgeschwindigkeiten realisierbar sind.

Diese Aufgabe erfüllt die Fluidsteuerung gemäß Anspruch 1.

### ZUSAMMENFASSUNG DER ERFINDUNG

Nach einem ersten Aspekt stellt die vorliegende Erfindung eine Fluidsteuerung zur Betätigung einer Stellzylinderanordnung eines Bremslüftgeräts zur Verfügung, welche die oben genannten Nachteile weitgehend überwindet.

Dabei weist die Fluidsteuerung auf: einen Vorlaufstrang zum Druckaufbau in der Stellzylinderanordnung, einen Rücklaufstrang zum Druckabbau aus der Stellzylinderanordnung, wobei im Rücklaufstrang ein erster und ein zweiter Rücklaufzweig vorgesehen sind, die parallel wirken, im ersten Rücklaufzweig zwei parallel wirkende, ohne Aktivierung geöffnete erste Stellventile vorgesehen sind und im zweiten Rücklaufzweig ein zweites ohne Aktivierung geöffnetes Stellventil vorgesehen ist, und durch eine entsprechende Ansteuerung der ersten Stellventile und des zweiten Stellventils der Druckaufbau aus der Stellzylinderanordnung und damit eine Stellzylinderbewegung mit mehreren Geschwindigkeiten realisierbar ist.

Weitere Aspekte und Merkmale der vorliegenden Erfindung ergeben sich aus den abhängigen Ansprüchen, der beigefügten Zeichnung und der nachfolgenden Beschreibung bevorzugter Ausführungsformen.

### KURZBESCHREIBUNG DER ZEICHNUNG

Ausführungsformen der Erfindung werden nun beispielhaft und unter Bezugnahme auf die beigefügte Zeichnung beschrieben. Dabei zeigt:
- Fig. 1: ein Bremslüftgerät mit einer erfindungsgemäßen Fluidsteuerung;
- Fig. 2: ein erstes Ausführungsbeispiel der erfindungsgemäßen Fluidsteuerung des Bremslüftgeräts aus Fig. 1;
- Fig. 3: einen schematischen Schaltplan der erfindungsgemäßen Fluidsteuerung aus Fig. 2;
- Fig. 4: ein zweites Ausführungsbeispiel der erfindungsgemäßen Fluidsteuerung des Bremslüftgeräts aus Fig. 1;
- Fig. 5: einen schematischen Schaltplan der erfindungsgemäßen Fluidsteuerung aus Fig. 4;
- Fig. 6: eine Variante des ersten oder zweiten Ausführungsbeispiels der erfindungsgemäßen Fluidsteuerung des Bremslüftgeräts aus Fig. 1 bzw. Fig. 4 und
- Fig. 7: einen schematischen Schaltplan der erfindungsgemäßen Fluidsteuerung aus Fig. 6.

### BESCHREIBUNG VON AUSFÜHRUNGSFORMEN

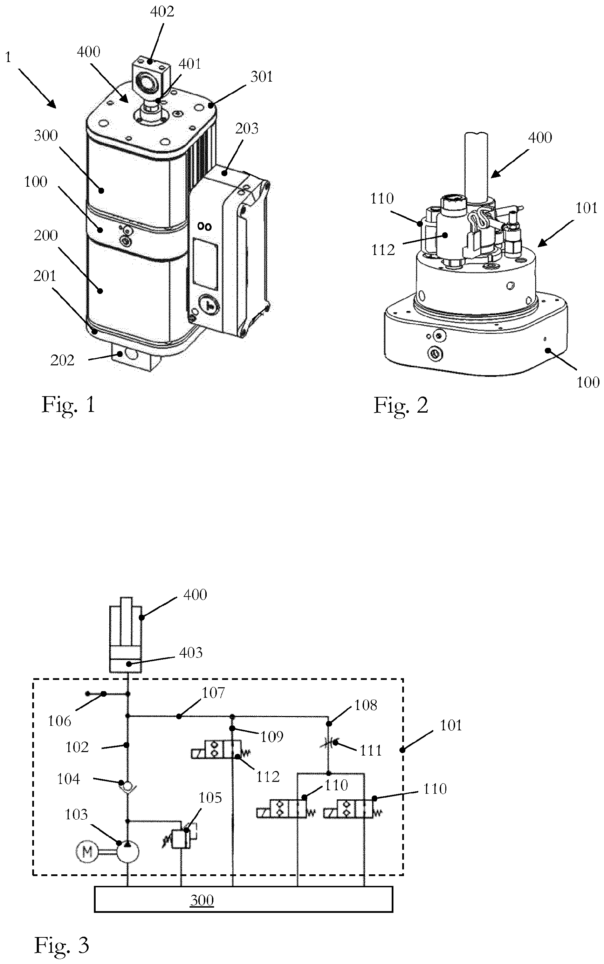

In Fig. 1 ist eine Ausführungsform in Übereinstimmung mit der vorliegenden Erfindung veranschaulicht. Vor einer detaillierten Beschreibung folgen zunächst allgemeine Erläuterungen zu den Aus führungs formen.

Die Erfindung zeichnet sich dadurch aus, dass zusätzlich zu den im ersten Rücklaufzweig parallel wirkenden Stellventilen in einem zweiten Rücklaufzweig ein weiteres, parallel zu den beiden anderen wirkendes Stellventil vorgesehen ist.

Die Ansteuerung erfolgt dabei wahlweise auf die beiden im ersten Rücklaufzweig angeordneten Stellventile und das im zweiten Rücklaufzweig angeordnete Stellventil. Durch die getrennte Ansteuerung lassen sich insgesamt drei unterschiedliche Strömungsquerschnitte im Rücklaufstrang definieren, die es ermöglichen, den Druckabbau aus der Stellzylinderanordnung zu variieren und damit eine Stellzylinderbewegung mit drei Geschwindigkeiten zu realisieren. Dabei können entweder die beiden im ersten Rücklaufzweig angeordneten Stellventile angesteuert werden oder das im zweiten Rücklaufzweig vorgesehene Stellventil oder sowohl die Ventile im ersten Rücklaufzweig als auch das Stellventil im zweiten Rücklaufzweig.

Dabei gibt es Ausführungen, bei denen der wirksame Strömungsquerschnitt der ersten Stellventile und des zweiten Stellventils in einem Verhältnis von 1 zu 1 bis 20 zu 1 ausgebildet ist.

Dabei gibt es Ausführungen, bei denen sowohl der Strömungsquerschnitt der ersten Stellventile als auch der Strömungsquerschnitt des zweiten Stellventils jeweils über ein vorgeschaltetes Drosselventil einstellbar ausgebildet ist. Damit lassen sich die Bremsgeschwindigkeiten bzw. die Geschwindigkeiten der Stellzylinderbewegung an die technologischen Bedingungen anpassen, unter denen die Bremslüftgeräte bzw. die Bremsanordnungen eingesetzt werden sollen. So können die Verhältnisse genau eingestellt und angepasst werden, ohne dass dazu verschiedene Stellventile erforderlich wären. Die Wahl des wirksamen Strömungsquerschnitts erfolgt über die Einstellung des Drosselventils.

Dabei gibt es Ausführungen, bei denen ein erster Rücklaufbetriebszustand vorgesehen ist, in dem (nur) die ersten Stellventile geöffnet sind, ein zweiter Rücklaufbetriebszustand, in dem (nur) das zweite Stellventil geöffnet ist und ein dritter Rücklaufbetriebszustand, in dem sowohl die ersten Stellventile als auch das zweite Stellventil geöffnet sind. Damit lassen sich drei unterschiedliche Bremsvorgänge realisieren.

Es gibt Ausführungen, bei denen die wirksamen Strömungsquerschnitte so eingestellt sind, dass die dem ersten, zweiten und dritten Rücklaufbetriebszustand zugeordneten Geschwindigkeiten (Geschwindigkeit der Stellzylinderbewegung bzw. Bremsgeschwindigkeit) in einem Verhältnis von 10 zu 1 zu 11 stehen. Hier sind vor allem der erste, schnelle und der zweite, stark verzögerte Betrieb relevant (erster, schneller Betrieb für eine echte Notbremsung und der zweite stark verzögerte Betrieb für ein kontrolliertes Anhalten/Abbremsen). Es sind aber auch Anwendungen möglich, bei denen durch eine gleichmäßige Stufung der Strömungsquerschnitte Bremsgeschwindigkeiten von 2 zu 1 zu 3 realisierbar sind. Beim Abbremsen von Bandanlagen kann z. B. folgendes Bremsregime realisiert werden: (1) Notbremsung bei Gefahr mit einer sehr schnellen Bremszeit (erste Stellventile und zweites Stellventil geöffnet); (2) Normales Abbremsen (erste Stellventile geöffnet); (3) Bremsung aus einer Überdrehzahl mit einer langen Bremszeit zur Vermeidung einer überdurchschnittlichen Belastung der Anlage auf Grund der erhöhten Dynamik (zweites Stellventil geöffnet).

Dabei gibt es Ausführungen, bei denen dem ersten Zweig in Rücklaufrichtung gesehen ein Drosselventil vorgeschaltet ist. Durch ein einziges Drosselventil wird der Strömungsquerschnitt im ersten Rücklaufzweig eingestellt und beeinflusst damit den ersten und dritten Rücklaufbetriebszustand.

Es gibt Ausführungen, bei denen im zweiten Zweig ein einstellbares und/oder ansteuerbares Proportionalventil angeordnet ist, mit dem der Druckabbau und damit eine Stellzylinderbewegung einstellbar sind, und zwar insbesondere im zweiten Rücklaufbetriebszustand. Damit ist es möglich, in Ergänzung oder alternativ zu den unterschiedlichen Stellzylindergeschwindigkeiten geregelte Bremsvorgänge zu realisieren, bei denen eine zeitliche Veränderung der Anpresskraft der Bremsbeläge an der Bremsscheibe oder Bremstrommel während des Bremsvorgangs realisierbar ist. Dazu kann ein proportionales magnetbetätigtes Druckbegrenzungsventil vorgesehen werden, das solche Bremsvorgänge erlaubt.

Dabei gibt es Ausführungen, bei denen das Ventil ohne Aktivierung (also stromlos) geschlossen ist und dessen Druckgrenze bei der Beaufschlagung mit einem Sollwert veränderbar ist. Der maximal zu begrenzende Druck ist dabei beispielsweise abhängig von der Gerätegröße des zugehörigen Bremslüftgeräts und kann vorab am Ventil fest eingestellt werden. Die Durchflussmenge dieser Ventile ist normalerweise deutlich geringer als der vergleichbarer 2/2-Wegeventile. Dadurch kann der Bremsvorgang stark gedämpft sein und es können vergleichsweise weiche Bremsprofile realisiert werden.

Es gibt auch Ausführungen, bei denen ein solches Proportionalventil in Reihe mit einem 2/2-Wegeventil kombiniert wird. Dabei ist das 2/2-Wegeventil für das Einleiten des eigentlichen Bremsvorgangs verantwortlich, während das Proportionalventil lediglich dazu verwendet wird, während des Bremsvorgangs ein variiertes Strömungs- und damit Geschwindigkeitsprofil zu realisieren. Das Proportionalventil übernimmt dabei die Rolle eines dynamischen Drosselventils.

Es gibt Ausführungen, bei denen die Proportionalventile über die Variation eines Spannungspegels angesteuert werden.

In anderen Ausführungen können auch pulsweitenmodulierte (PWM) Proportionalventile verwendet werden, die es erlauben die Strömungsquerschnittsprofile sehr genau zu variieren (progressive Öffnung, degressive Öffnung, Öffnungsstufen, oszillierende Öffnungsprofile etc.)

Es gibt Ausführungen, bei denen ergänzend zu dem ersten und zweiten Rücklaufzweig ein dritter Zweig vorgesehen ist, in dem ein Druckbegrenzungsventil angeordnet ist. So ein Druckbegrenzungsventil löst folgendes Problem:
Bei Anwendungen, bei denen ein Bremslüftgerät über einen längeren Zeitraum in der gelüfteten Stellung (Kolbenstange ausgefahren) betrieben wird, kann es aufgrund von Eigen- bzw. Fremderwärmung (Sonneneinstrahlung, Betrieb in heißer Umgebung) zu einer Ausdehnung des in der Stellzylinderanordnung (im Zylinderrohr) eingespannten Hydraulikfluids kommen. Dieser unerwünschte Druckaufbau kann im Extremfall zu einer Zerstörung der Dichtelemente im Zylinderbereich führen. Damit wird die Funktion des Bremslüftgeräts wenigstens eingeschränkt oder völlig verhindert. Ein entsprechend vorgesehenes Druckbegrenzungsventil spricht bei einem Grenzüberdruckwert an, auf den das Druckbegrenzungsventil eingestellt ist. Dieser Einstellwert liegt in der Regel oberhalb des Arbeitsdruckbereichs des Bremslüftgeräts, so dass das Druckbegrenzungsventil im normalen Betrieb nicht anspricht.

Wird der Einstellwert jedoch während des Betriebs überschritten, wird der Überdruck bzw. das den Überdruck bedingende Öl(teil)volumen in den Tank abgeleitet, wobei die Kolbenstange des Bremslüftgeräts im Wesentlichen unverändert in der oberen Stellung bleibt und die Funktion des Geräts weiterhin gesichert ist, aber dennoch der schädliche Überdruck hinreichend abgebaut wird. Vorzugsweise ist das Druckbegrenzungsventil auch im Inneren des Tankgehäuses angeordnet, um Manipulationen zu verhindern.

Es gibt Ausführungen, bei denen das Druckbegrenzungsventil einstellbar ausgebildet ist. Bei so einer Ausführung kann die Druckbegrenzung an unterschiedliche Bremsanordnungen bzw. an unterschiedliche Bremskräfte angepasst werden.

So ein Druckbegrenzungsventil kann auch in Ausführungen eingesetzt werden, bei denen nur der erste Rücklaufzweig vorgesehen ist, also nur eine Bremsgeschwindigkeit realisiert ist.

Es gibt Ausführungen, bei denen die ersten und zweiten Stellventile als elektromagnetisch betätigbare 2/2-Wegeventile ausgebildet sind. Solche Ventile sind in hoher Qualität verfügbar und lassen sich besonders einfach elektrisch bzw. elektromagnetisch ansteuern.

Die vorliegende Erfindung betrifft weiter ein Bremslüftgerät mit einer Fluidsteuerung, die wenigstens eines der oben genannten Merkmale aufweist, wobei der Vorlauf- und der Rücklaufstrang als Kanalanordnung in einer Funktionseinheit ausgebildet sind und die Anschlüsse für die Ventile und die Stellzylinderanordnung in der Funktionseinheit derart ausgebildet sind, dass die Ventile und Stellzylinderanordnung innerhalb einer Tankbaugruppe angeordnet sind. Dadurch lassen sich sehr kompakte und leistungsfähige Bremslüftgeräte realisieren, bei denen die wesentlichen Steuerungskomponenten manipulationssicher angeordnet sind.

Dabei gibt es Ausführungen, bei denen die Funktionseinheit mit der Kanalanordnung und den Anschlüssen einstückig aus einem Werkstoffblock ausgebildet ist.

Weiterhin betrifft die vorliegende Erfindung eine Bremsanordnung mit einem Bremslüftgerät, welches die vorgenannten Eigenschaften aufweist.

Nun zurückkehrend zu den Figuren. Fig. 1 zeigt ein erfindungsgemäßes Bremslüftgerät 1, und zwar mit seinen Hauptkomponenten, der Funktionseinheit 100, einer elektrischen Antriebseinheit 200 sowie einer Tankbaugruppe 300, die von einer Stellzylinderanordnung 400 durchsetzt wird. Am Boden 201 der elektrischen Antriebseinheit 200 sind zwei Anschlussösen 202 ausgebildet. Den Deckel 301 durchsetzt der Stellkolben 401 der Stellzylinderanordnung 400. Er weist an seinem Ende ebenfalls eine Anschlussöse 402 auf. Der Stellkolben 401 ist in Fig. 1 in seiner Ruhelage, also in seiner eingefahrenen Stellung dargestellt. Seitlich an der elektrischen Antriebseinheit 200 ist ein Anschlusskasten 203 angebracht.

Fig. 2 zeigt die Funktionseinheit 100 ohne die elektrische Antriebseinheit 200 und die Tankbaugruppe 300. Die Funktionseinheit 100 trägt und beherbergt die wesentlichen Elemente der erfindungsgemäßen Fluidsteuerung 101, deren funktioneller Aufbau zunächst anhand der Fig. 3 erläutert wird.

Hier ist die Fluidsteuerung durch den gestrichelten Rahmen 101 angedeutet. Die Fluidsteuerung 101 umfasst einen Vorlaufstrang 102 zum Druckaufbau in der Stellzylinderanordnung 400. Der Vorlaufstrang 102 verbindet die Tankbaugruppe 300 über eine elektromotorisch angetriebene Hydraulikpumpe 103 und ein Rückschlagventil 104 mit dem Druckraum 403 der Stellzylinderanordnung 400. Zwischen der Hydraulikpumpe 103 und dem Rückschlagventil 104 ist ein Überdruckventil 105 vorgesehen, welches den Vorlaufstrang 102 mit der Tankbaugruppe verbindet.

Beim Druckaufbau fördert die Hydraulikpumpe 103 aus der Tankbaugruppe 300 Hydrauliköl in den Druckraum 403 und baut dort einen Druck auf, der eine Stellzylinderbewegung verursacht und eine mit dem Bremslüftgerät verbundene Bremsanordnung in den gelüfteten Zustand bringt. Der Rückfluss des Hydraulikmediums wird durch das Rückschlagventil 104 verhindert. Das Überdruckventil 105 verhindert einen zu hohen Druckaufbau im Druckraum 403.

Die Steuerung der Hydraulikpumpe 103 wird über einen Druckschalter 106 realisiert, der bei Erreichen eines bestimmten Grenzdrucks die Hydraulikpumpe 103 abschaltet. Alternativ oder ergänzend kann die Steuerung auch über Positionssensoren (nicht dargestellt) an der Stellzylindereinheit 400 erfolgen, die die Stellung der Stellzylinderanordnung 400 (eingefahren/ausgefahren) erfassen und entsprechend signalisieren.

Zum Einleiten des Bremsvorgangs ist ein Rücklaufstrang 107 vorgesehen, der den Druckraum 403 ebenfalls mit der Tankbaugruppe 300 verbindet. Die Verbindung erfolgt über einen ersten Rücklaufzweig 108 und einen zweiten Rücklaufzweig 109. Im ersten Rücklaufzweig 108 sind zwei parallel wirkende, ohne Aktivierung geöffnete erste Stellventile vorgesehen, die als stromlos geöffnete 2/2-Wegeventile 110 ausgebildet sind. Den ersten Stellventilen 110 ist optional ein Drosselventil 111 vorgeschaltet.

Im zweiten Rücklaufzweig 109 ist ein zweites ohne Aktivierung geöffnetes Stellventil 112 vorgesehen, das ebenfalls als stromlos geöffnetes 2/2-Wegeventil ausgebildet ist. Dem zweiten Stellventil 112 kann optional ebenfalls eine (hier nicht weiter dargestellte) Drossel vorgeschaltet sein. Die Stellventile werden über eine nicht weiter dargestellte Ansteuerung betätigt, die entweder im Schaltkasten 203 oder auch entfernt vom Bremslüftgerät angeordnet sein kann, z. B in einer Anlagensteuerung. Durch die getrennte und/oder gemeinsame Ansteuerung der ersten Stellventile 110 und des zweiten Stellventils 112 können unterschiedliche Öffnungsquerschnitte im Rücklaufstrang 107 realisiert werden, über die beim Bremsen der Rücklauf des Hydraulikfluids aus dem Druckraum 403 in die Tankbaugruppe 300 erfolgt.

In einem ersten Betriebszustand sind nur die beiden ersten Stellventile 110 geöffnet und lösen so eine erste Bremsgeschwindigkeit aus. In einem zweiten Betriebszustand ist nur das zweite Stellventil 112 geöffnet, so dass eine zweite, niedrigere Bremsgeschwindigkeit realisiert wird. In einem dritten Betriebszustand sind sowohl die ersten Stellventile 110 als auch das zweiten Stellventil 112 geöffnet, wodurch eine dritte Bremsgeschwindigkeit realisiert wird. Dabei ist die dritte Bremsgeschwindigkeit größer als die zweite und die erste Bremsgeschwindigkeit und die erste Bremsgeschwindigkeit ist größer als die zweite Bremsgeschwindigkeit. Durch entsprechende Einstellungen des Drosselventils bzw. der Drosselventile können die Bremsgeschwindigkeiten absolut und im Verhältnis zueinander eingestellt werden. Bevorzugt wird ein Geschwindigkeitsverhältnis von Bremsgeschwindigkeit 1 zu Bremsgeschwindigkeit 2 zwischen 20 zu 1 und 2 zu 1.

Typische realisierte Durchflussmengen für beide erste Stellventile 110 sind insgesamt 60 l/min also 30 l/min pro Ventil, für das einzelne zweite Stellventil sind 3 l/min typisch. Damit ergibt sich eine typische Bremszeit über das zweite Stellventil 112 von ca. 0,6 s. Über die ersten Stellventile 110 kommt man auf entsprechend kürzere Zeiten. Mit den vorgeschalteten Drosselventilen 111 können die Durchflussmengen und damit die Bremszeiten jedoch im Rahmen der verfügbaren Maximalquerschnitte individuell angepasst werden.

Die Ventile und die Stellzylinderanordnung 400 sind in entsprechenden Aufnahmen angeordnet, die in der Funktionseinheit 100 ausgebildet sind. Die Anschlüsse sind über im Inneren der Funktionseinheit 100 ausgebildete Kanäle in geeigneter Weise verbunden, so dass die Fluidsteuerung 101 mit ihrem Vorlaufstrang 102 und ihrem Rücklaufstrang 107 mit seinem ersten Rücklaufzweig 108 und seinem zweiten Rücklaufzweig 109 entsprechend realisiert sind.

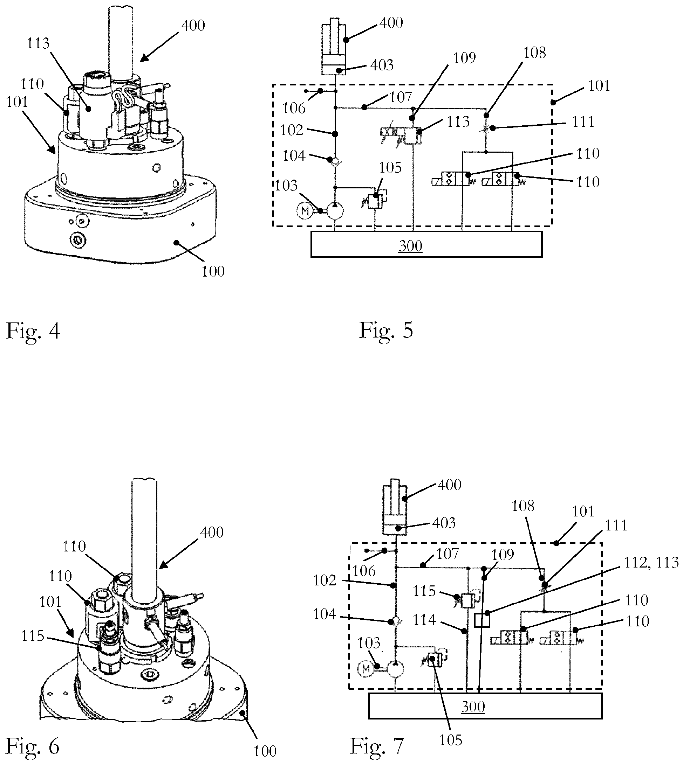

Die Fig. 4 und 5 zeigen eine Variante, bei welcher das zweite Stellventil 112 durch ein Proportionalventil 113 ersetzt wird. Das Proportionalventil 113 hat einen elektrisch ansteuerbar bzw. verstellbaren Strömungsquerschnitt, über den variable Rücklaufgeschwindigkeiten realisiert werden können (s. o.). In einer nicht dargestellten Ausführungsform kann dieses Proportionalventil 113 auch in Serie mit dem in Fig. 3 dargestellten zweiten Stellventil 112 realisiert werden. Ansonsten gleicht die in Fig. 4 und 5 dargestellte Funktionalität der in Fig. 2 und 3 dargestellten.

In Fig. 6 und 7 ist eine weitere Variante dargestellt. Hier ist in Ergänzung zum zweiten Rücklaufzweig 109 ein dritter Rücklaufzweig 114 vorgesehen, der ein zweites Überdruckventil 115 umfasst. Dieses zweite Überdruckventil 115 verhindert einen unerwünschten Druckaufbau bei unter Druck stehender Stellzylinderanordnung 400, bei der ein zusätzlicher Druckaufbau nicht durch die Hydraulikpumpe 103, sondern durch andere Umstände auftritt (Fremderwärmung, hohe Betriebstemperatur, veränderbare Betriebstemperaturen). Wird hier ein ggf. einstellbarer Grenzdruck überschritten, so spricht das zweite Überdruckventil 115 an und stellt einen Druckabbau sicher, der Schäden an der Stellzylinderanordnung 400 verhindert, aber gleichzeitig die Arbeitsstellung der Stellzylinderanordnung 400 nur unwesentlich verändert. Der dritte Rücklaufzweig 115 kann auch alternativ zum zweiten Rücklaufzweig 109 ausgebildet sein, also für eine Fluidsteuerung, die nur für eine Bremsgeschwindigkeit ausgelegt ist.

Weitere Varianten und Ausführungsformen der Erfindung entnimmt der Fachmann den Ansprüchen.

## Patentansprüche

1. Fluidsteuerung (101) zur Betätigung einer Stellzylinderanordnung (400) eines Bremslüftgeräts, wobei die Fluidsteuerung (101) aufweist:
einen Vorlaufstrang (102) zum Druckaufbau in der Stellzylinderanordnung (400),
einen Rücklaufstrang (107) zum Druckabbau aus der Stellzylinderanordnung (400), wobei
im Rücklaufstrang (107) ein erster und ein zweiter Rücklaufzweig (108, 109) vorgesehen sind, die parallel wirken,
im ersten Rücklaufzweig (108) zwei parallel wirkende, ohne Aktivierung geöffnete erste Stellventile (110) vorgesehen sind und
im zweiten Rücklaufzweig (109) ein zweites ohne Aktivierung geöffnetes Stellventil (112) vorgesehen ist, und
durch eine entsprechende Ansteuerung der ersten Stellventile (110) und des zweiten Stellventils (112) der Druckabbau aus der Stellzylinderanordnung (400) und damit eine Stellzylinderbewegung mit mehreren Geschwindigkeiten realisierbar ist.

2. Fluidsteuerung (101) nach Anspruch 1, wobei die Strömungsquerschnitte im ersten Rücklaufzweig (108) über die ersten Stellventile (110) und der im zweiten Rücklaufzweig (107) über das zweite Stellventil (112) in einem Verhältnis von 20 : 1 bis 1 : 1 ausgebildet ist.

3. Fluidsteuerung (101) nach Anspruch 1 oder 2, wobei in einem ersten Rücklaufbetriebszustand die beiden ersten Stellventile (110) geöffnet sind, in einem zweiten Rücklaufbetriebszustand das zweite Stellventil (112) geöffnet ist, und in einem dritten Rücklaufbetriebszustand die ersten Stellventile (110) und das zweite Stellventil (112) geöffnet sind.

4. Fluidsteuerung (101) nach Anspruch 3, wobei die dem ersten, zweiten und dritten Rücklaufbetriebszustand zugeordneten Geschwindigkeiten in einem Verhältnis von 2 : 1 : 3 bis 20 : 1 : 21 stehen.

5. Fluidsteuerung (101) nach einem der Ansprüche 1 bis 4, wobei dem ersten Rücklaufzweig (108) in Rücklaufrichtung gesehen ein Drosselventil (111) vorgeschaltet ist.

6. Fluidsteuerung (101) nach einem der Ansprüche 1 bis 5, wobei im zweiten Rücklaufzweig (109) ein einstellbares und/oder ansteuerbares Proportionalventil (113) angeordnet ist, mit dem der Druckabbau und damit eine Stellzylinderbewegung einstellbar sind.

7. Fluidsteuerung (101) nach einem der Ansprüche 1 bis 6, wobei im Rücklaufstrang (107) parallel zum ersten und zweiten Rücklaufzweig (108, 109) ein dritter Rücklaufzweig (114) vorgesehen ist, in dem ein Druckbegrenzungsventil (115) vorgesehen ist.

8. Fluidsteuerung (101) nach Anspruch 7, wobei das Druckbegrenzungsventil (115) einstellbar ausgebildet ist.

9. Fluidsteuerung (101) nach einem der Ansprüche 1 bis 8, wobei die ersten und zweiten Stellventile (110, 112) als elektromagnetisch betätigbare 2/2-Wegeventile ausgebildet sind.

10. Bremslüftgerät (1) mit einer Fluidsteuerung (101) nach einem der Ansprüche 1 bis 9, wobei der Vorlauf- und der Rücklaufstrang (102, 107) als Kanalanordnung in einer Funktionseinheit (100) ausgebildet sind, und die Anschlüsse für die Ventile und die Stellzylinderanordnung in der Funktionseinheit (100) derart ausgebildet sind, dass die Ventile und Stellzylinderanordnung innerhalb einer Tankbaugruppe (300) angeordnet sind.

11. Bremsanordnung mit einem Bremslüftgerät (1) nach Anspruch 10.
